# EUROPÄISCHE PATENTANMELDUNG

(11) **EP 4 496 192 A1**
(43) Veröffentlichungstag der Anmeldung: **22.01.2025**
(21) Anmeldenummer: 23186002.4
(22) Anmeldetag: 18.07.2023
(51) Int. Cl.: H02K 5/24

(54) **GEHÄUSEFUSSANORDNUNG ZUR BEFESTIGUNG EINES GEHÄUSES EINES ANTRIEBSTRANGS MIT REDUZIERTER KÖRPERSCHALLABSTRAHLUNG**

(71) Anmelder: Flender GmbH, 46395 Bocholt (DE)
(72) Erfinder: ZEICHFÜßL, Roland, 46395 Bocholt (DE); OBERMEIER, Tobias, 46395 Bocholt (DE)
(74) Vertreter: Michalski Hüttermann & Partner Patentanwälte mbB

(57) **Zusammenfassung**

Es ist eine Gehäusefußanordnung (28) zur Befestigung eines Gehäuses (26) eines Antriebstrangs (14) mit einem Untergrund (30) vorgesehen mit einem an dem Gehäuse (26) angreifbaren Stützblech (38, 40) zur Aufnahme von Gewichtskräften, und einer mit dem Stützblech (38, 40) verbundenen Auflageplatte (32) zur Befestigung und Abstützung an den Untergrund (30), wobei das Stützblech (38, 40) mehrere in einen direkten Lastpfad zwischen dem Gehäuse (26) und der Auflageplatte (32) hineinreichende Schlitze (42) zur Schwingungsdämpfung von Körperschall aufweist. Durch die kostengünstig erzeugbaren Schlitze (42) in dem an dem schwingenden Gehäuse (26) angreifenden Stützblech (38, 40) kann bereits eine Schwingungsdämpfung von Körperschall erfolgen, bevor die Schwingungen an der Auflageplatte (32) ankommen, so dass eine kostengünstige Herstellung eines geräuscharmen Antriebsstrangs (14) ermöglicht ist.

## Beschreibung

Die Erfindung betrifft eine Gehäusefußanordnung, mit dessen Hilfe ein Gehäuse eines Antriebstrangs mit einem Untergrund in einer Weise befestigt werden kann, dass eine Körperschallabstrahlung reduziert ist. Zudem betrifft die Erfindung einen Antriebsstrang mit einer derartigen Gehäusefußanordnung und ein die Gehäusefußanordnung und den Antriebsstrang virtuell abbildendes Datenagglomerat.

Rotierende Bauteile in einem Antriebsstrang können Schwingungen erzeugen, die in Form von Körperschall abgestrahlt werden können. Um derartige Geräuschemissionen zu vermeiden, ist es bekannt, ein in dem Antriebsstrang vorgesehenes Gehäuse, welches die rotierenden Bauteile umgibt und von den rotierenden Bauteilen in Schwingung versetzt werden kann, über ein elastisches und schwingungsdämpfendes Material mit einem Untergrund zu verbinden.

Aus DE 196 33 421 A1 ist es bekannt bei einem Antriebsstrang für einen Schiffsantrieb einen Stator einer elektrischen Maschine über starre Füße mit einer mit einem Untergrund befestigten elastisch federnden Stahlgestell zu verbinden.

Es besteht ein ständiges Bedürfnis einen geräuscharmen Antriebsstrang kostengünstig herzustellen.

Es ist die Aufgabe der Erfindung Maßnahmen aufzuzeigen, die einen kostengünstigen und geräuscharmen Antriebsstrang ermöglichen.

Die Lösung der Aufgabe erfolgt durch eine Gehäusefußanordnung mit den Merkmalen des Anspruchs 1, einen Antriebsstrang mit den Merkmalen des Anspruchs 11, einen Antriebsstrang mit den Merkmalen des Anspruchs 12 sowie ein Datenagglomerat mit den Merkmalen des Anspruchs 15. Bevorzugte Ausgestaltungen sind in den Unteransprüchen und der nachfolgenden Beschreibung angegeben, die jeweils einzeln oder in Kombination einen Aspekt der Erfindung darstellen können, wobei der Schutzbereich durch die Ansprüche bestimmt wird. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Ein Aspekt der Erfindung betrifft eine Gehäusefußanordnung zur Befestigung eines Gehäuses eines Antriebstrangs mit einem Untergrund, mit einem an dem Gehäuse angreifbaren Stützblech zur Aufnahme von Gewichtskräften und einer mit dem Stützblech verbundenen Auflageplatte zur Befestigung und Abstützung an den Untergrund, wobei das Stützblech mehrere in einen direkten Lastpfad zwischen dem Gehäuse und der Auflageplatte hineinreichende Schlitze zur Schwingungsdämpfung von Körperschall aufweist.

Eine Dämpfung von Schwingungen, die zu einer Körperschallabstrahlung führen können, kann bereits in unmittelbarer Nähe des Gehäuses erfolgen, in dem die rotierenden und schwingungserzeugende Bauteile eingehaust sind. Anstatt einen Gehäusefuß des Gehäuses starr auszuführen und erst nachgelagert im Lastpfad der schwingenden Belastung eine dissipative oder destruktive Dämpfung vorzusehen, kann bereits in dem Stützblech der Gehäusefußanordnung im Vergleich zu einer ungeschlitzten Platte mit gleichen Abmessungen mit Hilfe der Schlitze eine bewusste Elastizität vorgesehen sein. Das geschlitzte Stützblech kann elastisch federn und dadurch eine Federwirkung bereitstellen, wodurch sich eine Eigenfrequenz eines zugehörigen Masse-Feder-Systems verändern kann. Auftretende Schwingungen können dadurch gefiltert und zumindest in ihrer Amplitude reduziert werden, wodurch Geräuschemissionen reduziert werden können. Insbesondere ist es möglich Frequenzen in den eingeleiteten Schwingungen so weit zu dämpfen, dass hörbarer Körperschall vermieden oder zumindest deutlich reduziert ist und allenfalls noch nicht hörbare Frequenzen abgestrahlt werden. Durch die kostengünstig erzeugbaren Schlitze in dem an dem schwingenden Gehäuse angreifenden Stützblech kann bereits eine Schwingungsdämpfung von Körperschall erfolgen, bevor die Schwingungen an der Auflageplatte ankommen, so dass eine kostengünstige Herstellung eines geräuscharmen Antriebsstrangs ermöglicht ist.

Das Stützblech kann gegebenenfalls selbst Schwingungen in den Lastpfad induzieren, die beispielsweise zu einer destruktiven Interferenz mit den aus dem Gehäuse stammenden Schwingungen führen können. Da die Anregung des schwingfähigen geschlitzten Stützblechs von den aus dem Gehäuse stammenden Schwingungen abhängt, können die von den Stützblech induzierten Schwingungsfrequenzen gut mit den Schwingungsfrequenzen der aus dem Gehäuse stammenden Schwingungen skalieren. Da das Stützblech unmittelbar kontaktierend an dem Gehäuse zur Anlage kommen kann, ist auch ein die Anpassung der Schwingungsfrequenzen des Stützblechs mit den Schwingungsfrequenzen des Gehäuses störendes Zwischenbauteil vermieden. Eine unbeabsichtigte resonanzbedingte Verstärkung der in das Stützblech eingeleiteten Schwingungen kann dadurch vermieden werden. Insbesondere ist das schwingende Gehäuse übermehrere Gehäusefußanordnung abgestützt, so dass sich das abzustützende Gewicht auf die mehreren Gehäusefußanordnungen verteilen kann. Dies erleichtert es über die Anzahl der vorgesehenen Gehäusefußanordnungen eine für den Zweck einer Schwingungsdämpfung von Körperschall geeignete Materialdicke für das Stützblech vorzusehen. Das Stützblech kann dazu ausgeformt sein der Außenkontur des abzustützenden Gehäuses an seiner Mantelfläche oder Stirnseite zu folgen und nicht nur im Wesentlichen punktuell, sondern flächig anzuliegen. Dadurch kann das Stützblech den Vibrationen und Schwingungen des Gehäuses leichter folgen und diese aufnehmen.

Der Lastpfad entspricht dem Kraftfluss von dem Gehäuse an die Auflageplatte über das Stützblech, der sich ergeben würde, wenn in dem Stützblech keine Schlitze vorgesehen wären. Für die Definition des Lastpfads wird eine idealisierte Betrachtungsweise herangezogen, bei der die von dem Gehäuse flächig in das Stützblech eingeleiteten Kräfte durch eine in einem einzelnen Krafteinleitungspunkt des Stützblechs zusammengefasste resultierende Kraft ersetzt werden und die das Stützblech insbesondere flächig verlassenden und in die Auflageplatte eingeleiteten Kräfte ebenfalls in einen einzelnen Kraftausleitungspunkt des Stützblechs zusammengefasste resultierende Kraft ersetzt werden. Der Krafteinleitungspunkt und der Kraftausleitungspunkt des Stützblechs sind über den Lastpfad miteinander verbunden, wobei in der Regel der Lastpfad dem kürzesten Weg zwischen dem Krafteinleitungspunkt und der Kraftausleitungspunkt folgt, sofern keine Kerbwirkungen, Materialstärkenänderungen oder sonstige von einer ebenen Platte abweichenden Formfaktoren vorliegen.

Die Schlitze können in ihrer Form und Lage innerhalb des Stützblechs geeignet ausgewählt sein, um innerhalb des Stützblechs die Schwingungsdämpfung von Körperschall zu bewirken. Insbesondere sind die Schlitze durch Stanzen herstellbar, so dass das Stützblech zusammen mit seinen Schlitzen leicht und kostengünstig aus einem metallischen Blech in einem gemeinsamen Arbeitsschritt, vorzugsweise mit dem gleichen Stanzwerkzeug, hergestellt werden kann. Es ist auch möglich die Schlitze beispielsweise durch Brennschneiden, Lasern oder Wasserstrahlen zu erzeugen, wodurch es möglich ist Stützbleche mit einer besonders hohen Materialdicke, beispielsweise eine Materialdicke von 30 mm oder mehr, zu verwenden. Grundsätzlich ist es möglich die Schlitze lediglich als Materialverjüngung auszubilden, wobei im Bereich der die Schlitze ausbildenden Materialverjüngung eine deutlich geringere federnde Nachgiebigkeit als in den übrigen Bereich des Stützblechs vorgesehen ist. Besonders bevorzugt sind die Schlitze als durchgängige Durchbrüche ausgebildet, die sich zwischen unterschiedlichen Seiten des Stützblechs vollständig erstecken. Die Schlitze können zumindest einmal den idealisiert gedachten Lastpfad schneiden. Dis führt dazu, dass der tatsächlich reelle Lastpfad des geschlitzten Stützblechs an dem jeweiligen Schlitz vorbeilaufen muss. Der reelle Lastpfad verläuft dadurch nicht mehr auf dem kürzesten Weg zwischen dem Krafteinleitungspunkt und dem Kraftausleitungspunkt, sondern wird bewusst umgelenkt, verlängert und folgt einem eher mäanderförmig geschlängelten und/oder gewellten Verlauf. Durch den bewusst verlängerten reellen Lastpfad, bei dem die übertragenen Kräfte zumindest anteilig quer zu ihrer am Krafteinleitungspunkt vorliegenden Ausrichtung, vorzugsweise hin und her, umgelenkt werden, kann zusätzlich die Eigenfrequenz des zugehörigen Masse-Feder-Systems verändert werden, so dass ein Abstrahlen von Körperschall in einem für dem Menschen hörbaren Bereich stark reduziert wird. Insbesondere ragen die Schlitze in Richtung des Lastpfads ohne Schlitze alternierend jeweils von unterschiedlichen Rändern her in den sich ohne Schlitze ergebenen Lastpfad, wodurch der sich mit Schlitzen ergebene reelle Lastpfad besonders lang gestaltet werden kann.

Die Schwingungsdämpfung von Körperschall in dem Stützblech kann dadurch erfolgen, dass durch ein bewusstes Schwingen des Stützblechs infolge der durch die Schlitze in den Stützblech erreichten elastischen Federfähigkeit des Stützblechs Schwingungen erzeugt werden, die durch eine destruktive Interferenz mit den von dem Gehäuse eingeleiteten Schwingungen gedämpft werden können. Zusätzlich oder alternativ kann die Schwingungsdämpfung von Körperschall dadurch erfolgen, dass durch die Schlitze in dem Stützblech der reelle Lastpfad durch das Stützblech verlängert und dadurch die Frequenz der an die Bodenplatte ausgeleiteten Schwingungen in einem nicht mehr hörbare Frequenzbereich vorliegen oder im hörbaren Frequenzbereich deutlich verringert sind. Zudem kann durch den verlängerten reellen Lastpfad der Effekt von inneren Reibungseffekten innerhalb des Stützblechs bei der Übertragung der Schwingungen erhöht werden, so dass die Amplitude der Schwingungen und damit die Lautstärke des Körperschalls verringert, also gedämpft, werden kann.

Die Auflageplatte kann ein Auflager ausbilden, mit dessen Hilfe das über das Stützblech befestigte schwingungsfähige Gehäuse an einen, insbesondere nicht schwingungsfähigen, Untergrund abgestützt werden kann. Bei einer Windkraftanlage kann der Untergrund durch einen Maschinenträger und/oder eine Gondel ausgebildet werden, die jeweils ebenfalls schwingfähig sein können. Die Auflageplatte kann flächig auf dem Untergrund aufliegen, um die abzustützenden Kräfte etwas verteilt an dem Untergrund abtragen zu können. Das Stützblech kann insbesondere im Wesentlichen senkrecht an der Auflageplatte angesetzt sein, beispielsweise durch Schweißen befestigt sein. Das im Wesentlichen scheibenförmige und/oder plattenförmige Stützblech kann insbesondere mit einer Schmalseite an einer Oberseite der Auflageplatte angesetzt sein, während eine von der Oberseite weg weisenden Unterseite der Auflageplatte auf dem Untergrund aufliegt. Die Auflageplatte kann ein Lochmuster aufweisen, um die Auflageplatte mit einem im Untergrund versenkten Innengewinde mit Hilfe einer Befestigungsschraube verschrauben zu können.

Das Gehäuse kann rotierende Bauteile einhausen, die aufgrund von Unwuchten, beispielsweise über ihre an dem Gehäuse abgestützten Lager, unter Fliehkrafteinfluss Schwingungen in das Gehäuse einleiten. Das Gehäuse ist beispielsweise Teil einer elektrischen Maschine, bei der ein mit einem Stator elektromagnetisch zusammenwirkender Rotor über die elektromagnetische Wechselwirkung bei der Relativdrehung des Rotors zum Stator Kraftschwingungen induziert, die von dem Gehäuse abgestützt werden sollen. Das Gehäuse kann Teil eines Getriebes, insbesondere Planetengetriebe, sein, bei dem die Lagerkräfte und/oder Stützkräfte einer an dem Gehäuse festgesetzten Getriebekomponente des Planetengetriebes, Kraftschwingungen in das Gehäuse einleiten können. In der Regel weist das Gehäuse bezogen auf seine Oberfläche ein geringes Gewicht auf, so dass Flächenbereiche des Gehäuses leicht in Schwingung versetzt werden können. Die mit diesen Schwingungen verbundenen Kräfte können an weitere direkt oder indirekt mit dem Gehäuse verbundenen Bauteile übertragen werden, so dass diese Bauteile ebenfalls zum Schwingen angeregt werden und hörbaren Körperschall abstrahlen können. Insbesondere bei einer Windkraftanlage, bei der das schwingfähige Gehäuse zumindest mittelbar mit einer auf einem Turm der Windkraftanlage befestigten Gondel befestigt ist, könnten die Schwingungen des Gehäuses die Gondel anregen und die Umgebung mit abgestrahlten Körperschall belästigen, so dass insbesondere bei einer Windkraftanlage Maßnahmen zur Schwingungsdämpfung von Körperschall vorteilhaft sind.

Der Antriebsstrang kann rotierende Bauteile aufweisen, um ein an einem Ende des Antriebsstrangs erzeugtes Drehmoment an einem anderen Ende des Antriebsstrangs zu nutzen. Das Drehmoment kann hierbei über mit einer bestimmten Drehzahl rotierende Bauteile von dem einen Ende zu dem anderen Ende übertragen werden, so dass die rotierenden Bauteile Kraftschwingungen in das die rotierenden Bauteile zumindest teilweise abdeckende Gehäuse einleiten können. Bei einer Industrieapplikation kann der Antriebsstrang eine elektrische Maschine aufweisen, die über ein Getriebe eine mechanische Anwendung antreibt. Bei einer industriellen Windkraftanlage kann der Antriebsstrang einen Windrotor zum Einleiten eines durch Windkraft erzeugten Drehmoments und eine, insbesondere über ein Getriebe, angeschlossene elektrische Maschine zur Stromerzeugung aufweist.

Industrielle Windkraftanlagen sind vornehmlich zur Energieerzeugung aus Windkraft ausgestaltet, wobei aus der Windkraft gewonnene elektrische Energie insbesondere in ein öffentliches Stromnetz eingeleitet werden kann, um Energieverbraucher mit regenerativ erzeugter Energie versorgen zu können. Ein für eine industrielle Windkraftanlage ausgestaltetes Windkraftgetriebe ist insbesondere für eine Leistung über 1,0 MW, vorzugsweise über 5,0 MW und besonders bevorzugt über 7,5 MW ausgelegt und entsprechend robust und großvolumig ausgestaltet.

Insbesondere sind eine Materialdicke des Stützblechs und eine Schlitzbreite der Schlitze derart aufeinander abgestimmt, dass über den jeweiligen Schlitz aufeinander zu weisende Blechteile des Stützblechs zur Schwingungsdämpfung von Körperschall relativ zueinander elastisch schwingbar ausgeführt sind. Durch die Schlitze ergeben sich Teilbereiche des Stützblechs, die innerhalb ihrer Blechebene in das von den benachbarten Schlitzen freigegebene Volumen hineinfedern können, wodurch dämpfende Schwingungen erzeugt werden können, welche die zu hörbaren Körperschall führende Schwingungen dämpfen können. Insbesondere ist es möglich, dass der an einem Schlitz sich anschließender Teilbereich des Stützblechs aus der Blechebene heraus federelastisch herausschwingen kann, wobei vorzugsweise beide Schwingungsrichtungen gleichzeitig auftreten und sich gegenseitig überlagern. Die Dämpfungswirkung gegen hörbaren Körperschall kann dadurch verbessert werden. Hierbei ist es möglich über die Materialdicke des Stützblechs eine höhere oder geringere Federkonstante einzustellen und dadurch auf die Frequenz der von dem Teilbereich des Stützblech erzeugbaren Schwingungen Einfluss zu nehmen. Zudem kann über die Schlitzbreite eine maximale Schwingamplitude des Teilbereichs innerhalb der Blechebene des Stützblechs vorgegeben werden und/oder durch eine besonders groß gewählte Spaltbreite ein Anschlagen benachbarter nur über einen Schlitz voneinander getrennter Teilbereiche aneinander zu verhindern.

Vorzugsweise weist zumindest einer der Schlitze einen geraden Verlauf und/oder zumindest einer der Schlitze einen gebogenen Verlauf und/oder zumindest einer der Schlitze einen zickzack-förmigen Verlauf und/oder zumindest einer der Schlitze einen wellenförmigen Verlauf und/oder zumindest einer der Schlitze einen aus verschiedenen Verläufen zusammengesetzten Verlauf auf. Über die Form des Verlaufs des jeweiligen Schlitzes kann beeinflusst werden, wie leicht und mit welcher Federkonstante ein benachbarter Teilbereich des Stützblechs innerhalb der Blechebene des Stützblechs schwingen kann. Vorzugsweise sind bei verschiedenen Schlitzen verschiedene Formverläufe vorgesehen, so dass im Wesentlichen zwei gleich große Teilbereiche ein unterschiedliches Schwingverhalten aufweisen können. Durch die über die Formgestaltung des Verlaufs der jeweiligen Schlitze einfach einstellenden Schwingungseigenschaften des Stützblechs ist es leicht möglich einen größeren Frequenzbereich an Schwingungen dämpfen zu können.

In einer weiteren Ausführungsform weist zumindest einer der Schlitze eine konstante Schlitzbreite und/oder zumindest einer der Schlitze eine sich konstant verändernde Schlitzbreite und/oder zumindest einer der Schlitze eine sich trichterförmig zu einem Rand des Stützblechs hin vergrößernde Schlitzbreite und/oder zumindest einer der Schlitze einen sich polynomisch verändernde Schlitzbreite und/oder zumindest einer der Schlitze eine sich unregelmäßig verändernde Schlitzbreite auf. Über die Schlitzbreite kann ein Schwingungsverhalten eines benachbarten Teilbereichs des Stützblechs innerhalb der Blechebene beeinflusst werden.

Besonders bevorzugt ist zumindest einer der Schlitze zu einem Rand des Stützblechs hin geöffnet und/oder zumindest einer der Schlitze vollständig geschlossen innerhalb des Stützblechs ausgebildet. Wenn der Schlitz zum Rand hin geöffnet ausgeführt ist, kann ein zwischen zwei derartigen Schlitzen ausgebildeter Teilbereich des Stützblechs zum Rand hin abstehen und leicht innerhalb der Blechebene schwingen. Zudem können sich dadurch für die Schwingungen des Stützblechs niedrige Frequenzen und/oder hohe Amplituden ergeben. Wenn der Schlitz als vollständig geschlossene Öffnung in dem Stützblech eingebracht ist, kann ein benachbarter Teilbereich des Stützblech weniger stark schwingen. Dadurch können sich für die Schwingungen des Stützblechs hohe Frequenzen und/oder niedrige Amplituden ergeben. Durch eine Kombination von zum Rand hin geöffneten und zum Rand hin geschlossenen Schlitzen können die von dem Stützblech erzeugbaren Schwingungen für die Schwingungsdämpfung von dem zu erwartenden Körperschall angepasst werden.

Insbesondere ist eine durchschnittliche Ausrichtung der Schlitze im Wesentlichen senkrecht zum direkten Lastpfad ausgerichtet. Wenn der Schlitz eine von einer Gerade abweichende Form aufweist, wird die durchschnittliche Ausrichtung des betroffenen Schlitzes durch eine Ausgleichsgerade zu der Außenkontur des Schlitzes, insbesondere nach der Methode der geringsten Fehlerquadrate, definiert. Der sich tatsächlich einstellende reelle Lastpfad des geschlitzten Stützblechs kann dadurch besonders lang ausgeführt sein. Die sich entlang des reellen Lastpfads ausbreitenden Schwingungen des Körperschalls werden dadurch besonders oft, insbesondere um im Wesentlichen 180° umgelenkt, wodurch eine dissipative Dämpfung durch Reibung vergrößert werden kann.

Vorzugsweise weist das Stützblech ein im Wesentlichen parallel zur Auflageplatte abstehendes Hilfsblech auf, wobei das Hilfsblech über mindestens eine mit dem Gehäuse verbindbare Nase zur Aufnahme von Gewichtskräften und/oder Körperschall vorgesehen ist. Das Hilfsblech kann durch Blechumformen des Stützblechs ausgebildet sein und hierbei insbesondere zweilagig ausgestaltet sein. Vorzugsweise ist das Hilfsblech an einer Hauptseite des übrigen Stützblechs angeschweißt oder anderweitig fest befestigt. Die Schwingungen des Gehäuses können dadurch auch in das Hilfsblech eingeleitet werden, wobei das Hilfsblech diese Schwingungen als Biegemomente in das übrige Stützblech einleiten kann. Dadurch kann das in der Art eines Kragbalkens wirkende Hilfsblech eine elastische Verformung des übrigen Stützblechs bewirken. Hierbei kann das Hilfsblech selber ebenfalls mit der Frequenz der eingeleiteten Schwingungen elastisch verformt werden. Dies ermöglicht es, dass die über das Hilfsblech in das übrige Stützblech eingeleiteten Schwingungen mit einer Phasenverschiebung in das übrige Stützblech eingeleitet werden können. Über eine geeignete Einstellung eines wirksamen Hebelarms, mit dem das Hilfsblech an dem übrigen Stützblech angreift, kann eine destruktive Interferenz der über das Hilfsblech und unmittelbar über das übrige Stützblech eingeleiteten Schwingungen erreicht werden. Das Hilfsblech kann hierbei an genau einer von dem Gehäuse abstehenden Nase anliegen. Es ist aber auch möglich, dass das Hilfsblech zwischen zwei an unterschiedlichen Hauptseiten des Hilfsblechs angreifenden oder sogar anliegenden Nasen angeordnet ist und/oder dass zwei oder mehr Nasen zueinander entlang der Erstreckung des ausgebildeten Hebelarms beabstandet an der selben Hauptseite angreifen oder anliegen.

Besonders bevorzugt weist das Hilfsblech mehrere in einen direkten Lastpfad zwischen der Nase und das übrige Stützblech hineinreichende Schlitze zur Schwingungsdämpfung von Körperschall auf. Vergleichbar zu dem übrigen Stützblech kann das Hilfsblech ebenfalls geschlitzt ausgeführt sein, wobei die vorstehenden Erläuterungen zum übrigen Stützblech bezüglich der Schlitze als bevorzugte Ausführungsform des Hilfsblechs analog gelten. Die von dem Hilfsblech in das übrige Stützblech eingeleiteten Schwingungen können dadurch an die bereits im reellen Lastpfad des übrigen Stützblechs erfolge Schwingungsdämpfung angepasst werden, wodurch die Schwingungsdämpfung des Körperschalls weiter verbessert ist.

Insbesondere sind ein erstes Stützblech zur flächigen Anlage an einer Mantelfläche des Gehäuses über eine Schmalseite des ersten Stützblechs und ein zu dem ersten Stützblech über die Auflageplatte beabstandetes zweites Stützblech zur flächigen Anlage an einer Stirnseite des Gehäuses über eine Hauptseite des zweiten Stützblechs vorgesehen. Vorzugsweise sind mehr als zwei zueinander beabstandete Stützbleche mit dem Gehäuse und mit der Auflageplatte verbunden. Über den Abstand des ersten Stützblechs zum zweiten Stützblech kann bereits eine freie Schwingstrecke des Gehäuses reduziert und eine Versteifung des Gehäuses erfolgen. Dies ermöglicht es über die Anzahl und den Abstand der Stützbleche bereits eine Schwingungsdämpfung des Körperschalls zu erreichen. Vorzugsweise kann das stirnseitig flächig anliegende Stützblech als Teil des Gehäuses das Gehäuse stirnseitig verschließen. Besonders bevorzugt trägt das stirnseitig flächig anliegende Stützblech ein Lager für ein rotierendes Bauteil, beispielsweise eine Rotorwelle eines Rotors einer elektrischen Maschine oder eine Getriebewelle eines Getriebes. Die von dem rotierenden Bauteil in das Lager als Lagerkräfte eingeleiteten Schwingungen können dadurch von dem Stützblech aufgenommen und in räumlicher Nähe zu dem Lager bereits gedämpft werden, so dass eine Anregung weiterer schwingungsfähiger Bauteile zumindest reduziert werden kann.

Vorzugsweise sind mehrere Schlitze in Dickenrichtung zwischen den Hauptseiten des Stützblechs und/oder des Hilfsblechs nacheinander vorgesehen. Bei einer ausreichenden Materialdicke des Stützblechs und/oder des Hilfsblechs ist es auch möglich die Schlitze als Taschen auszuführen und hierbei insbesondere zwei oder mehr als Taschen ausgestaltete Schlitze in Dickenrichtung übereinander vorzusehen. Die als Taschen ausgeführten Schlitze sind insbesondere ausschließlich zu einer Schmalseite hin geöffnet und ansonsten von Material des Stützblechs beziehungsweise des Hilfsblechs umgeben. Dies ermöglicht es auch höherfrequente Schwingungen zu dämpfen.

Besonders bevorzugt weist die Auflageplatte ein Lochmuster zur Befestigung mit dem Untergrund und mindestens einen Schlitz zur Schwingungsdämpfung von Körperschall auf. Das Lochmuster der Auflageplatte kann eine Durchgangsöffnung oder mehrere Durchgangsöffnungen aufweisen, durch die Eine Schraube hindurchgeführt werden kann, um das die Auflageplatte mit dem Untergrund zu verschrauben, in dem ein korrespondierendes Innengewinde vorgesehen ist. Die Durchgangsöffnung kann beispielsweise als kreisförmiges Loch oder Langloch ausgestaltet sein. Der in der Auflageplatte eingebrachte Schlitz kann in einen Lastpfad zwischen dem Stützblech und der Durchgangsöffnung des Lochmusters vorgesehen sein. Dadurch kann auch in der Auflageplatte noch eine gewisse elastische Verformung erfolgen, die einen Beitrag zur Schwingungsdämpfung des Körperschalls leisten kann.

Ein weiterer Aspekt der Erfindung betriff Antriebsstrang, insbesondere für eine Windkraftanlage, mit einer elektrischen Maschine, insbesondere Generator zur Erzeugung von elektrischer Energie aus Windkraft, und einem Untergrund zur Abstützung von Lasten, wobei ein Gehäuse der elektrischen Maschine über eine Gehäusefußanordnung, die wie vorstehend beschrieben aus- und weitergebildet sein kann, mit dem Untergrund befestigt ist. Durch die kostengünstig erzeugbaren Schlitze in dem an dem schwingenden Gehäuse angreifenden Stützblech kann bereits eine Schwingungsdämpfung von Körperschall erfolgen bevor die Schwingungen an der Auflageplatte ankommen, so dass eine kostengünstige Herstellung eines geräuscharmen Antriebsstrangs ermöglicht ist.

Ein weiterer Aspekt der Erfindung betrifft einen Antriebsstrang, insbesondere für eine Windkraftanlage, mit einem Getriebe zur Wandlung einer Drehzahl und/oder eines Drehmoments und einem Untergrund zur Abstützung von Lasten, wobei ein Gehäuse des Getriebes über eine Gehäusefußanordnung, die wie vorstehend beschrieben aus- und weitergebildet sein kann, mit dem Untergrund befestigt ist. Durch die kostengünstig erzeugbaren Schlitze in dem an dem schwingenden Gehäuse angreifenden Stützblech kann bereits eine Schwingungsdämpfung von Körperschall erfolgen, bevor die Schwingungen an der Auflageplatte ankommen, so dass eine kostengünstige Herstellung eines geräuscharmen Antriebsstrangs ermöglicht ist.

Insbesondere ist der Untergrund Teil einer schwingungsfähigen Gondel der Windkraftanlage oder Teil eines mit der schwingungsfähigen Gondel der Windkraftanlage verbundenen Maschinenträgers. Da bereits in der Gehäusefußanordnung ein ansonsten auftretender hörbarer Körperschall ganz oder teilweise gedämpft beziehungsweise getilgt werden kann, kann zugelassen werden, dass der Untergrund, mit dem die Auflageplatte befestigt ist, selbst ebenfalls schwingungsfähig ist. Die ermöglicht eine filigrane und materialsparende Ausgestaltung der Gondel und/oder des Maschinenträgers, so dass Herstellungskosten gesenkt werden kann. Ein Abstrahlen von Körperschall über die Gondel und/oder Ermüdungsbrüche in dem Maschinenträger und/oder in der Gondel können vermieden werden. Zusätzliche konstruktive Maßnahmen, mit deren Hilfe die Gondel und/oder der Maschinenträger versteift und/oder gedämpft werden sollen, können eingespart oder zumindest reduziert werden.

Vorzugsweise sind in einem Lastpfad zwischen dem Gehäuse und dem Untergrund ausschließlich Bauteile aus Metall vorgesehen. Zusätzliche Dämpferelemente, die aus einem elastomeren Material und/oder einem natürlichen und/oder künstlichen Gummi- und/oder Kautschuk-Material hergestellt sind, können eingespart werden. Die Herstellungskosten können dadurch reduziert werden. Zudem weisen Metallbauteile im Vergleich zu elastomeren und/oder gummiartigen Dämpferelementen eine deutlich höhere Lebensdauer auf, so dass durch das Einsparen eines Austauschs gealterter Dämpferelemente auch die Wartungskosten gesenkt sind. Insbesondere bei einer Offshore-Windkraftanlage, die rauen Umweltbedingungen ausgesetzt ist und nur schwierig gewartet werden kann, ist ein Einsparen von wartungsintensiven Dämpferelementen von Vorteil, da dadurch beispielsweise Wartungsintervalle zeitlich gestreckt werden können.

Besonders bevorzugt sind die Schlitze zumindest teilweise, vorzugsweise vollständig, mit einer unter Last verformbaren Dichtmasse ausgefüllt. Die Dichtmasse muss nicht notwendigerweise elastisch ausgeführt sein und kann stattdessen eine weiche, verformbare aber zusammenhängende Masse sein. Durch die Dichtmasse kann ein Korrosionsschutz der den jeweiligen Schlitz begrenzenden Schmalflächen erreicht werden. Ein Eindringen von korrosiven Stoffen, beispielsweise Wasser oder Salzwasser, in den Schlitz kann von der Dichtmasse blockiert werden. Da die Dichtmasse sehr weich ausgeführt sein kann und keine Federeigenschaften aufweisen muss, wird die Schwingungsfähigkeit der von den benachbarten Schlitzen begrenzten Teilbereichen des Stützblechs nicht signifikant beeinträchtigt oder kann mit geringen Modifikation in der Formgestaltung des Stützblechs und der Schlitze bei der konstruktiven Gestaltung des Stützblechs berücksichtigt werden. Eine geeignete Dichtmasse ist beispielsweise Polyurethan, Silikon, Butylkautschuk oder Ähnliches. Vorzugsweise kann das Stützblech nach dem Ausfüllen der Schlitze mit der Dichtmasse beschichtet, insbesondere überlackiert, werden, beispielsweise um einen Korrosionsschutz für das Stützblech zu erreichen. Durch die Beschichtung sind die Schlitze und die Dichtmasse kaum noch sichtbar, wodurch der optische Eindruck verbessert ist. Zudem kann mit Hilfe der Dichtmasse ein vollständiger Korrosionsschutz erreicht werden, da das Risiko, dass das Beschichtungsmaterial das Innere eines der Schlitze nicht vollständig abdeckt vermieden ist. Eine Qualitätskontrolle des Korrosionsschutzes ist vereinfacht und das Risiko eines Ausschusses mit nicht ausreichendem Korrosionsschutz reduziert.

Ein weiterer Aspekt der Erfindung betrifft eine Industrie-Applikation mit einem Getriebe, das ein Gehäuse und in dem Gehäuse vorgesehene relativ zum Gehäuse drehbare Getriebekomponenten aufweist, wobei das Gehäuse über eine Gehäusefußanordnung, die wie vorstehend beschrieben aus- und weitergebildet sein kann, an einem Untergrund abgestützt und insbesondere befestigt ist. Die Industrie-Applikation kann ein Antriebsmittel aufweisen, das beispielsweise als elektrische Maschine, Brennkraftmaschine, Hydraulikmotor oder windkraftgetriebener Rotor ausgestaltet sein kann. Das Antriebsmittel kann mit einem Getriebe zur Wandlung eines Drehmoments und einer Drehzahl der von dem Antriebsmittel erzeugten Leistung gekoppelt sein, wobei das Getriebe wie vorstehend beschrieben aus- und weitergebildet sein kann. Das Getriebe der Industrie-Applikation kann wiederum drehmomentübertragend mit einer mechanischen Anwendung gekoppelt sein, in der über das Getriebe eingeleitete mechanische Energie genutzt werden kann. Bei der mechanischen Anwendung handelt es sich beispielsweise um eine Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse, Schrottpresse, Zerkleinerer für recyclingfähige Materialen aus, gegebenenfalls zuvor getrennten und/oder sortierten, Abfällen oder Ähnliches. Durch die kostengünstig erzeugbaren Schlitze in dem an dem schwingenden Gehäuse angreifenden Stützblech kann bereits eine Schwingungsdämpfung von Körperschall erfolgen, bevor die Schwingungen an der Auflageplatte ankommen, so dass eine kostengünstige Herstellung eines geräuscharmen Antriebsstrangs der Industrie-Applikation ermöglicht ist.

Ein Aspekt betrifft ferner ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in der Gehäusefußanordnung, die wie vorstehend beschrieben aus- und weitergebildet sein kann oder dem Antriebsstrang, der wie vorstehend beschrieben aus- und weitergebildet sein kann, vorgesehenen Bestandteile, wobei die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile der Gehäusefußanordnung oder des Antriebsstrangs, insbesondere durch 3D-Druck, und/oder bei einer Verarbeitung durch eine Datenverarbeitungseinrichtung zur Durchführung einer technischen Simulation eine Simulation der Funktionsweise der Gehäusefußanordnung oder des Antriebsstrangs durchzuführen und hierbei erzeugte Simulationsergebnisse für eine weitere Verwendung auszugeben, insbesondere zu dem Zweck einen Dauerfestigkeitsnachweis und/oder eine Körperschallschwingungsanalyse in Abhängigkeit veränderlicher Lasten und/oder veränderlicher Temperaturbelastungen zu erbringen und gegebenenfalls mit an einer real produzierten erfindungsgemäßen Vorrichtung und/oder an einem Prototyp der erfindungsgemäßen Vorrichtung ermittelten Messdaten zu vergleichen. Die Datenpakete des Datenagglomerat sind an die erfindungsgemäße Ausgestaltung der jeweiligen vorstehend beschriebenen erfindungsgemäßen Vorrichtung speziell angepasst, um die erfindungsgemäße Wechselwirkung der Bestandteile der erfindungsgemäßen Vorrichtung bei der Verarbeitung in der Datenverarbeitungseinrichtung adäquat abbilden zu können. Die Datenpakete können insbesondere räumlich verteilt gespeichert sein, aber derart aneinander angepasst sein, dass in dem Fall, dass alle Datenpakete in einer gemeinsamen Datenverarbeitungseinrichtung zusammengeführt sind, das so zusammengesetzte Datenagglomerat alle erforderlichen Daten für eine additive Fertigung und/oder eine technische Simulation mit Hilfe der Datenverarbeitungseinrichtung für die erfindungsgemäße Vorrichtung bereitstellt. Beispielsweise sind die Datenpakete jeweils separate Teile einer Datenbibliothek ("Library"), die zur Ausbildung des Datenagglomerats zusammengeführt und bezüglich ihrer relativen Abmessungen zueinander und/oder absoluten Abmessungen und/oder Werkstoffeigenschaften korrespondierend zu der jeweiligen erfindungsgemäßen Vorrichtung aneinander angepasst sind. Das Datenagglomerat kann in der Art eines sogenannten "digital twin" eine virtuelle Verkörperung der jeweiligen erfindungsgemäßen Vorrichtung darstellen, die eine virtuelle Untersuchung in Form einer Simulation oder eine reale Vergegenständlichung mit Hilfe eines additiven Fertigungsverfahrens ermöglicht. Ein derartiger digitaler Zwilling ist beispielsweise in US 2017/286572 A1 dargestellt, auf dessen Offenbarungsgehalt als Teil der Erfindung hiermit Bezug genommen wird.

Wenn die Datenverarbeitungseinrichtung der Werkzeugmaschine das Datenagglomerat verarbeitet, wird die erfindungsgemäße Vorrichtung hergestellt, so dass nach der Verarbeitung des Datenagglomerats in der Datenverarbeitungseinrichtung die erfindungsgemäße Vorrichtung, zumindest in Form eines Prototyps, erhalten wird. Insbesondere kann jeweils ein Datenpaket einen separat ausgeführten Bestandteil der jeweiligen zugeordneten erfindungsgemäßen Vorrichtung abbilden, so dass die einzelnen Bestandteile in ihrer Relativlage und/oder Relativbeweglichkeit leicht tatsächlich und/oder virtuell zusammengesetzt werden können, um die erfindungswesentlichen Wechselwirkungen zu realisieren. Insbesondere ist es möglich mit Hilfe der jeweiligen Datenpakete die verschiedenen Bestandteile der jeweiligen Vorrichtung separat und gegebenenfalls aus unterschiedlichen Materialen durch additive Fertigung zu erzeugen und nachfolgend zu einem Prototyp der jeweiligen Vorrichtung zusammenzusetzen. Die Aufteilung der Daten des Datenagglomerats auf verschiedene Datenpakete ermöglicht dadurch in einfacher Weise eine sequentielle additive Fertigung von relativ zueinander bewegbaren Bestandteilen der jeweiligen Vorrichtung in Form eines Bausatzes ("Kit of parts"), der dazu hergerichtet ist für die erfindungsgemäße Wechselwirkung der Bestandteile des Prototyps für die Lösung des der Erfindung zu Grunde liegenden Problems nur noch sinnfällig zusammengesetzt zu werden.

Zusätzlich oder alternativ ist es möglich mit Hilfe der Datenpakete des Datenagglomerats in einer virtuellen Umgebung während einer technischen Simulation die einzelnen Bestandteile der jeweiligen Vorrichtung, ihre Wechselwirkungen, den physikalische Zustand und/oder die Veränderung physikalischer Parameter in Abhängigkeit verschiedener Randbedingungen und/oder über die Zeit der zugehörigen erfindungsgemäßen Vorrichtung zu berechnen und/oder vorherzusagen sowie für die Überprüfung, ob die erfindungsgemäße Vorrichtung auf Basis der angenommenen Ausgestaltung und unter Berücksichtigung der angenommen simulierten Einflüsse für den beabsichtigten Einsatzzweck gut genug geeignet ist, weiterzuverwenden. Wenn das Datenagglomerat von einer die Simulationsumgebung abbildenden Datenverarbeitungseinrichtung verarbeitet wird, ist es möglich das Verhalten der erfindungsgemäßen Vorrichtung unter Berücksichtigung von, sich insbesondere verändernden, Randbedingungen untersuchen zu können. Dadurch ist es beispielsweise möglich Fliehkrafteffekte bei einzelnen Bestandteilen der erfindungsgemäßen Vorrichtung in Abhängigkeit von verschiedenen statischen und/oder dynamischen Lasten und/oder unterschiedlichen Betriebstemperaturen zu untersuchen, wobei derartige Simulationsergebnisse in die Erstellung eines Dauerfestigkeitsnachweis und/oder einer Körperschallschwingungsanalyse einfließen können. Vorzugsweise werden die nach der Verarbeitung des Datenagglomerats in der Datenverarbeitungseinrichtung für die Simulationsumgebung erhaltenen Simulationsergebnisse gespeichert, um diese mit an einer real produzierten erfindungsgemäßen Vorrichtung und/oder an einem Prototyp der erfindungsgemäßen Vorrichtung ermittelten Messdaten zu vergleichen. Dadurch ist es möglich die Güte der mit Hilfe des Datenagglomerats erhaltenen Simulationsergebnisse zu beurteilen und/oder, insbesondere bei besonders starken Abweichungen, Messfehler und/oder eine fehlerhafte Messung zu identifizieren. Eine zerstörungsfreie Qualitätskontrolle der erfindungsgemäßen Vorrichtung ist dadurch vereinfacht und verbessert.

Durch das Datenagglomerat ist eine kostengünstige Herstellung von Prototypen und/oder computerbasierten Simulationen ermöglicht, um die Funktionsweise des Rotationskörpers und/oder des Haltewerkzeugs zu studieren, Probleme im konkreten Anwendungsfall zu identifizieren und Verbesserungen zu finden. Die Lösung der der Erfindung zugrunde liegenden Aufgabe kann mit Hilfe des Datenagglomerats leicht und kostengünstig überprüft werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische perspektivische Ansicht einer Windkraftanlage,
Fig. 2: eine schematische Detailansicht einer Gehäusefußanordnung der Windkraftanlage aus Fig. 1,
Fig. 3: eine schematische Detailansicht der Gehäusefußanordnung aus Fig. 2 mit dargestelltem reellen Lastpfad,
Fig. 4: eine schematische Draufsicht auf eine erste Ausführungsform der Stützbleche der Gehäusefußanordnung aus Fig. 2,
Fig. 5: eine schematische Draufsicht auf eine zweite Ausführungsform der Stützbleche der Gehäusefußanordnung aus Fig. 2,
Fig. 6: eine schematische Draufsicht auf eine dritte Ausführungsform der Stützbleche der Gehäusefußanordnung aus Fig. 2 und
Fig. 7: eine schematische Draufsicht auf eine Auflageplatte der Gehäusefußanordnung aus Fig. 2.

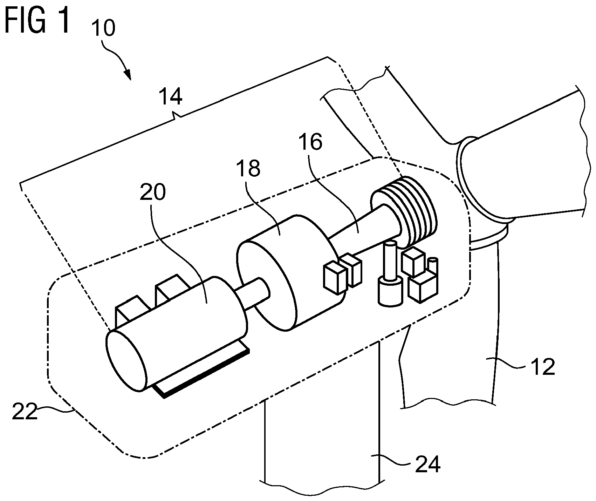

Die in Fig. 1 dargestellte Windkraftanlage 10 kann zur Erzeugung von elektrischer Energie aus Windkraft verwendet werden. Hierzu weist die Windkraftanlage 10 einen Rotor 12 auf, der durch Wind windkraftbetrieben in Drehung versetzt werden kann. Der Rotor 12 ist an einen Antriebsstrang 14 angekoppelt. Hierzu ist der Rotor 12 mit einer Rotorwelle 16 verbunden, die innerhalb des Antriebsstrangs 14 mit einem Getriebe 18 gekoppelt ist, um das über den Rotor 12 und die Rotorwelle 16 eingeleitete Drehmoment zu wandeln. Das in dem Getriebe 18 gewandelte Drehmoment wird einer im Generatormodus betriebenen elektrischen Maschine 20 zugeführt. Die von der elektrischen Maschine 20 erzeugte elektrische Energie kann einer wiederaufladbaren Batterie und/oder einem Stromnetz zugeführt werden. Der Antriebsstrang 14 ist im dargestellten Ausführungsbeispiel vollständig in einer Gondel 22 untergebracht, die an einem oberen freien Ende eines Standturms 24 angebracht ist.

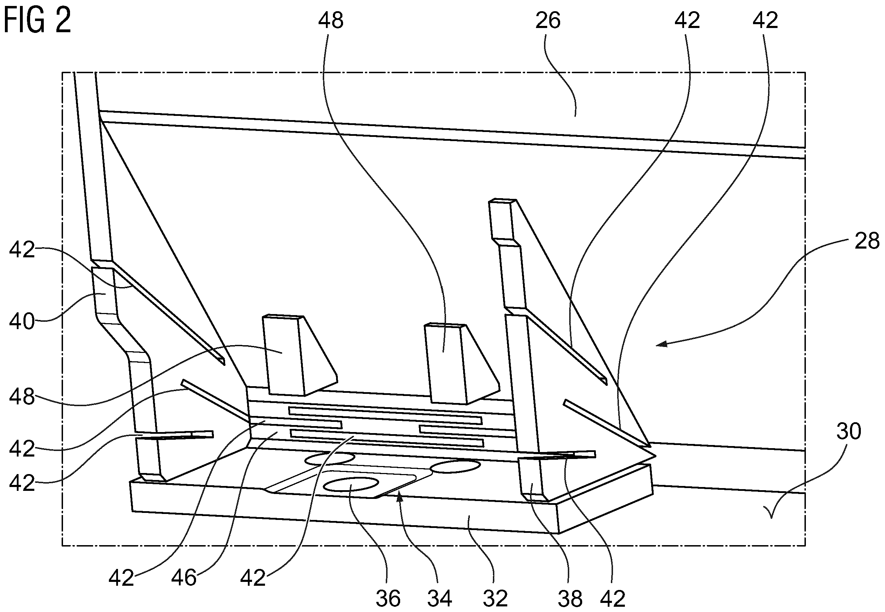

Wie in Fig. 2 dargestellt ist, kann ein Gehäuse 26 des Antriebsstrangs 14, insbesondere das Gehäuse 26 der elektrischen Maschine 20 und/oder das Gehäuse 26 des Getriebes 18, über eine Gehäusefußanordnung 28 mit einem Untergrund 30 befestigt werden. Der Untergrund 30 kann insbesondere durch die Gondel 22 oder einem an der Gondel 22 abgestützten Maschinenträger ausgebildet sein. Alternativ kann die Gehäusefußanordnung 28 auch ein Gehäuse 26 eines von einer Anwendung für Windkraftanlagen 10 verschiedenen Anwendung vorgesehenen Antriebsstrang 14, beispielsweise einer Industrieapplikation, abstützen. Der Untergrund 30 kann in diesem Fall beispielsweise ein Beton-Fundament sein.

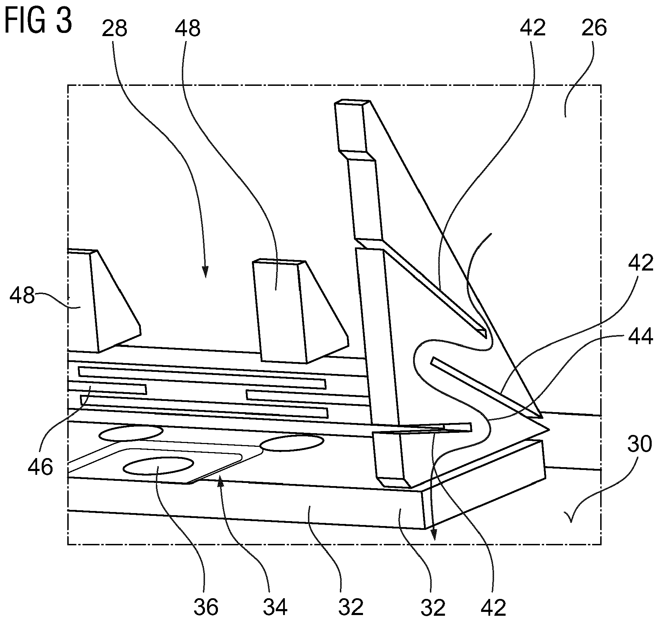

In dem in Fig. 2 dargestellten Ausführungsbeispiel weist die Gehäusefußanordnung 28 eine flächig an dem Untergrund 30 anliegende Auflageplatte 32 auf, die ein Lochmuster 34 mit einer Durchgangsöffnung 36 aufweist, um die Auflageplatte 32 mit dem Untergrund 30 verschrauben zu können. Mit der Auflageplatte 32 ist ein erstes Stützblech 38 und ein parallel zu einer Hauptdrehachse des Antriebstrangs 14 beabstandetes zweites Stützblech 40 an ihrer jeweiligen Schmalseite befestigt, insbesondere verschweißt. Das erste Stützblech 38 und das zweite Stützblech 40 sind mit dem schwingungsfähigen Gehäuse 26 verbunden, insbesondere verschweißt. Im dargestellten Ausführungsbeispiel liegt das erste Stützblech 38 mit einer Schmalseite flächig an einer Mantelfläche des Gehäuse 26 an, während das zweite Stützblech 40 mit einer Hauptseite flächig an einer Stirnseite des Gehäuses 26 anliegt. Das erste Stützblech 38 und/oder das zweite Stützblech 40 kann Schlitze 42 aufweisen, die beispielsweise gerade ausgeführt sind und/oder an einem Rand einer freien Schmalseite des Stützblechs 38, 40 beginnen können. Die Schlitze 42 können einen sich ohne Schlitze 42 einstellenden Lastpfad innerhalb des Stützblechs 38, 40 schneiden. Vorzugsweise erstreckt sich der jeweilige Schlitz 42 über eine Hälfte der Breite der Hauptseiten des Stützblechs 38, 40 hinaus. Insbesondere sind die Schlitze 42 in Richtung des Lastpfads alternierend vorgesehenen, so dass sich ein schlangenförmig gewundener reeller Lastpfad 44 in dem Stützblech 38, 40 einstellt, wie in Fig. 3 dargestellt ist.

In dem in Fig. 2 dargestellten Ausführungsbeispiel ist exemplarisch am ersten Stützblech 38 dargestellt, dass das erste Stützblech 38 ein im Wesentlichen parallel zur Auflageplatte 32 abstehendes Hilfsblech 46 aufweisen kann. Das Hilfsblech 46 kann in der Art einer Kragplatte Biegemomente in das übrige erste Stützblech 38 einleiten, die von dem schwingungsfähigen Gehäuse 26 über eine abstehende Nase 48 in das Hilfsblech 46 eingeleitet wurden. In dem dargestellten Ausführungsbeispiel kann das Hilfsblech 46 mit derselben Hauptseite mit zwei zueinander beabstandeten Nasen 48 in Kontakt geraten. Vorzugsweise weist auch das Hilfsblech 46 Schlitze 42 auf, die im dargestellten Ausführungsbeispiel als nur zu einer einzigen Schmalseite hin geöffnete Taschen ausgebildet sind.

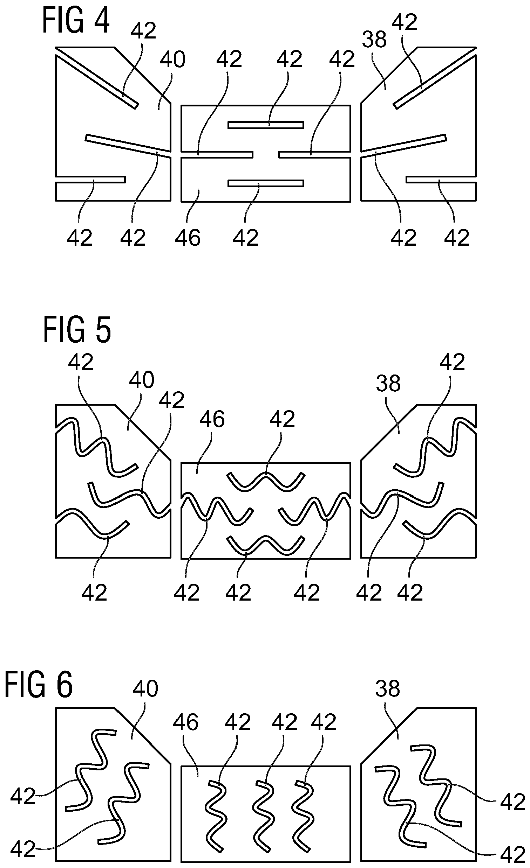

Wie in Fig. 4 dargestellt ist, können sämtliche Schlitze 42 der Stützbleche 38, 40 einschließlich des Hilfsblechs 46 gerade ausgeführt sein. Grundsätzlich ist es möglich, dass zumindest einer der Schlitze 42 bis zu einem Rand läuft und zu diesem Rand hin geöffnet ausgeführt ist. Zusätzlich oder alternativ ist auch möglich, dass zumindest einer der Schlitze 42 als vollständig geschlossene Durchgangsöffnung ausgeführt ist.

Wie in Fig. 5 dargestellt ist, kann zumindest einer der Schlitze 42 einen wellenförmigen und/oder zick-förmigen Verlauf aufweisen. Besonders bevorzugt sind mehrere wellenförmigen und/oder zick-förmigen Schlitze 42 vorgesehen, bei denen die Frequenz und/oder die Amplitude entlang einer durchschnittlichen Ausrichtung des Schlitzes 42, die eine Mittelline für die Auslenkungen des Verlaufs des Schlitzes 42 darstellen kann, unterschiedlich vorgesehen ist. Die Dämpfung verschiedener Frequenzen von zu einem Körperschall führenden Schwingungen kann dadurch verbessert werden.

Wie in Fig. 6 exemplarisch dargestellt ist, können sämtliche Schlitze 42 als geschlossene Durchgangsöffnung ausgeführt sein. Alternativ können sämtliche Schlitze 42 als zu einer Seite hin geöffnet ausgestaltet sein. Zudem ist es möglich verschiedene Formen von Schlitzen 42 in einer gemeinsamen Gehäusefußanordnung 28 vorzusehen, insbesondere innerhalb des selben Stützblechs 38, 40. Zudem ist es möglich, dass zumindest ein Schlitz 42 von einer Hauptseite zur anderen Hauptseite des Stützblechs 38, 40 durchgängig ausgeführt ist und/oder dass ein Schlitz 42 ohne Verbindung zu einer Hauptseite des Stützblechs 38, 40 als nur zu einer Schmalseite hin geöffnete Tasche ausgestaltet ist. Zudem ist es möglich die durchschnittliche Ausrichtung der jeweiligen Schlitze 42 zu variieren. Die durchschnittliche Ausrichtung von nebeneinander benachbart vorgesehener Schlitze 42 kann zueinander parallel verlaufen beziehungsweise unter einem Winkel zueinander verlaufen.

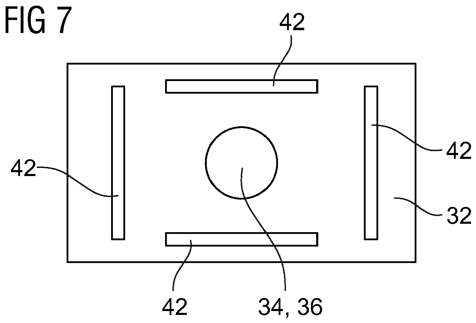

Wie in Fig. 7 dargestellt ist, können auch in der Auflageplatte 32 Schlitze 42 vorgesehen sein, die einen Beitrag zur Schwingungsdämpfung leisten können, um das Abstrahlen von hörbaren Körperschall zu r3duzieren, ohne dass in einem Lastpfad zwischen dem Gehäuse 26 und dem Untergrund 30 ein elastomeres oder gummiartiges Dämpfungsmaterial vorgesehen sein muss. Die Schwingungsdämpfung von Körperschall kann ausschließlich mit Hilfe metallischer Bauteile erfolgen, die mit Hilfe der Schlitze 42 bewusste elastisch nachgiebig ausgestaltet sind.

## Patentansprüche

1. Gehäusefußanordnung (28) zur Befestigung eines Gehäuses (26) eines Antriebstrangs (14) mit einem Untergrund (30), mit
einem an dem Gehäuse (26) angreifbaren Stützblech (38, 40) zur Aufnahme von Gewichtskräften und
einer mit dem Stützblech (38, 40) verbundenen Auflageplatte (32) zur Befestigung und Abstützung an den Untergrund (30),
wobei das Stützblech (38, 40) mehrere in einen direkten Lastpfad zwischen dem Gehäuse (26) und der Auflageplatte (32) hineinreichende Schlitze (42) zur Schwingungsdämpfung von Körperschall aufweist.

2. Gehäusefußanordnung (28) nach Anspruch 1, wobei eine Materialdicke des Stützblechs (38, 40) und eine Schlitzbreite der Schlitze (42) derart aufeinander abgestimmt sind, dass über den jeweiligen Schlitz (42) aufeinander zu weisende Blechteile des Stützblechs (38, 40) zur Schwingungsdämpfung von Körperschall relativ zueinander elastisch schwingbar ausgeführt sind.

3. Gehäusefußanordnung (28) nach Anspruch 1 oder 2, wobei zumindest einer der Schlitze (42) einen geraden Verlauf und/oder zumindest einer der Schlitze (42) einen gebogenen Verlauf und/oder zumindest einer der Schlitze (42) einen zick-zackförmigen Verlauf und/oder zumindest einer der Schlitze (42) einen wellenförmigen Verlauf und/oder zumindest einer der Schlitze (42) einen aus verschiedenen Verläufen zusammengesetzten Verlauf aufweist.

4. Gehäusefußanordnung (28) nach einem der Ansprüche 1 bis 3, wobei zumindest einer der Schlitze (42) zu einem Rand des Stützblechs (38, 40) hin geöffnet und/oder zumindest einer der Schlitze (42) vollständig geschlossen innerhalb des Stützblechs innerhalb des Stützblechs (38, 40) ausgebildet ist.

5. Gehäusefußanordnung (28) nach einem der Ansprüche 1 bis 4, wobei eine durchschnittliche Ausrichtung der Schlitze (42) im Wesentlichen senkrecht zum direkten Lastpfad ausgerichtet ist.

6. Gehäusefußanordnung (28) nach einem der Ansprüche 1 bis 5, wobei das Stützblech (38) ein im Wesentlichen parallel zur Auflageplatte (32) abstehendes Hilfsblech (46) aufweist, wobei das Hilfsblech (46) über mindestens eine mit dem Gehäuse (26) verbindbare Nase (48) zur Aufnahme von Gewichtskräften und/oder Körperschall vorgesehen ist.

7. Gehäusefußanordnung (28) nach Anspruch 6, wobei das Hilfsblech (46) mehrere in einen direkten Lastpfad zwischen der Nase (48) und das übrige Stützblech (38) hineinreichende Schlitze (42) zur Schwingungsdämpfung von Körperschall aufweist.

8. Gehäusefußanordnung (28) nach einem der Ansprüche 1 bis 7, wobei ein erstes Stützblech (38) zur flächigen Anlage an einer Mantelfläche des Gehäuses (26) über eine Schmalseite des ersten Stützblechs (38) und ein zu dem ersten Stützblech (38) über die Auflageplatte (32) beabstandetes zweites Stützblech (40) zur flächigen Anlage an einer Stirnseite des Gehäuses (26) über eine Hauptseite des zweiten Stützblechs (40)c vorgesehen sind.

9. Gehäusefußanordnung (28) nach einem der Ansprüche 1 bis 8, wobei mehrere Schlitze (42) in Dickenrichtung zwischen den Hauptseiten des Stützblechs (38, 40) und/oder des Hilfsblechs (46) nacheinander vorgesehen sind.

10. Gehäusefußanordnung (28) nach einem der Ansprüche 1 bis 9, wobei die Auflageplatte (32) ein Lochmuster (34) zur Befestigung mit dem Untergrund (30) und mindestens einen Schlitz (42) zur Schwingungsdämpfung von Körperschall aufweist.

11. Antriebsstrang (14), insbesondere für eine Windkraftanlage (10), mit einer elektrischen Maschine (20), insbesondere Generator zur Erzeugung von elektrischer Energie aus Windkraft, und einem Untergrund (30) zur Abstützung von Lasten, wobei ein Gehäuse (26) der elektrischen Maschine (20) über eine Gehäusefußanordnung (28) nach einem der Ansprüche 1 bis 10 mit dem Untergrund (30) befestigt ist.

12. Antriebsstrang (14), insbesondere für eine Windkraftanlage (10), mit einem Getriebe (18) zur Wandlung einer Drehzahl und/oder eines Drehmoments und einem Untergrund (30) zur Abstützung von Lasten, wobei ein Gehäuse (28) des Getriebes (18) über eine Gehäusefußanordnung (28) nach einem der Ansprüche 1 bis 10 mit dem Untergrund (30) befestigt ist.

13. Antriebsstrang (14) nach Anspruch 11 oder 12, wobei der Untergrund (30) Teil einer schwingungsfähigen Gondel (22) der Windkraftanlage (10) oder Teil eines mit der schwingungsfähigen Gondel (22) der Windkraftanlage (10) verbundenen Maschinenträgers ist.

14. Antriebsstrang (14) nach einem der Ansprüche 11 bis 13, wobei in einem Lastpfad zwischen dem Gehäuse (26) und dem Untergrund (30) ausschließlich Bauteile aus Metall vorgesehen sind.

15. Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in der Gehäusefußanordnung (28) nach einem der Ansprüche 1 bis 10 oder dem Antriebsstrang (14) nach einem der Ansprüche 11 bis 14 vorgesehenen Bestandteile, wobei die Datenpakete dazu hergerichtet sind
bei einer Verarbeitung durch eine Datenverarbeitungseinrichtung zum Betrieb einer Werkzeugmaschine zur additiven Fertigung von Vorrichtungen eine additive Herstellung der Bestandteile der Gehäusefußanordnung (28) oder des Antriebsstrangs (14), insbesondere durch 3D-Druck, durchzuführen
und/oder
bei einer Verarbeitung durch eine Datenverarbeitungseinrichtung zur Durchführung einer technischen Simulation eine Simulation der Funktionsweise der Gehäusefußanordnung (28) oder des Antriebsstrangs (14) durchzuführen und hierbei erzeugte Simulationsergebnisse für eine weitere Verwendung auszugeben, insbesondere zu dem Zweck einen Dauerfestigkeitsnachweis und/oder eine Körperschallschwingungsanalyse in Abhängigkeit veränderlicher Lasten und/oder veränderlicher Temperaturbelastungen zu erbringen.
